# EUROPEAN PATENT APPLICATION

(11) **EP 4 703 870 A1**
(43) Date of publication of application: **04.03.2026**
(21) Application number: 24219558.4
(22) Date of filing: 12.12.2024
(51) Int. Cl.: G06F 8/65, G06F 8/71, G06F 9/455

(54) **CONTAINER ORCHESTRATION PLATFORMS WITH A VERSION CONTROL SYSTEM**

(30) Priority: 27.08.2024 US 202418816672
(71) Applicant: Red Hat, Inc., Raleigh, NC 27601 (US)
(72) Inventor: CHIBON, Pierre-Yves, Raleigh, 27601 (US); WALLRABE, Paul, Raleigh, 27601 (US)
(74) Representative: Murgitroyd & Company

(57) **Abstract**

A change to a repository of a version control system is identified. A processing device may provide update data to a container orchestration platform in response to identification of the change to the repository of the version control system. The update data may be associated with a multi-stage update on a component of the container orchestration platform. The update data may indicate scheduling information associated with each stage of the multi-stage update. The repository may be updated based on completion data received from the container orchestration platform in response to performing at least a portion of the multi-stage update based on the update data.

## Description

### TECHNICAL FIELD

Aspects of the present disclosure relate to techniques for supporting container orchestration platforms with a version control system and, more particularly, to utilizing a version control system repository to provide a backing store for cluster data.

### BACKGROUND

A container orchestration platform may refer to a platform for automating, managing, and coordinating the deployment, scaling, and operations of multiple containers across multiple host systems. Typically, a container orchestration platform may be utilized for managing the lifecycle of containers, especially in large, dynamic environments. More generally, a container may refer to a lightweight, stand-alone, executable packages that includes everything needed to run a piece of software and orchestration may refer to the automated configuration, management, and coordination of complex systems, services, applications, and middle ware. Container orchestration usually includes a master node that manages worker nodes, where the containers are deployed. The master node may manage the cluster, schedule deployments, and maintain the desired state of the container ecosystem. A backing store may be utilized to store cluster data, such as configuration data.

### SUMMARY OF THE INVENTION

In accordance with a first aspect of the present disclosure, there is provided a method comprising: identifying a change to a repository of a version control system; providing, by a processing device, update data to a container orchestration platform in response to identification of the change to the repository of the version control system, the update data associated with a multi-stage update on a component of the container orchestration platform, and the update data including scheduling information associated with each stage of the multi-stage update; and updating the repository based on completion data received from the container orchestration platform in response to performing at least a portion of the multi-stage update based on the update data.

A hook may be utilized to provide the update data to the container orchestration platform in response to identification of the change to the repository of the version control system.

The completion data may be included in a commit notification received from the container orchestration platform.

The update data may be provided via an application programming interface (API) of the container orchestration platform.

The scheduling information may include or identify a directed-acyclic graph (DAG). The method may further comprise performing the multi-stage update based on the DAG. Each stage of the multi-stage update may correspond to a node in the DAG. A hook may be utilized to perform the multi-stage update based on the DAG.

Each stage of the multi-stage update may correspond to a node in the DAG and/or a hook may be utilized to perform the multi-stage update based on the DAG.

The component of the container orchestration platform may comprise a first component and a second component, the update data may comprise first update data associated with the first component, and the method may further comprise providing second update data associated with the second component to the container orchestration platform based on the completion data. A hook may be utilized to provide the second update data.

The method may further comprise performing the multi-stage update on the component of the container orchestration platform based on the scheduling information associated with each stage of the multi-stage update.

The method may further comprise generating at least a portion of a directed-acyclic graph (DAG) based on the change to the repository of the version control system, wherein the scheduling information includes the DAG.

In accordance with a second aspect of the present disclosure, there is provided a system comprising: a memory; and a processing device, operatively coupled to the memory, configured to perform the method of the first aspect or its optional examples. In particular, the system in accordance with the second aspect comprises a memory; and a processing device, operatively coupled to the memory, configured to: identify a change to a repository of a version control system; provide update data to a container orchestration platform in response to identification of the change to the repository of the version control system, the update data associated with a multi-stage update on a component of the container orchestration platform, and the update data including scheduling information associated with each stage of the multi-stage update; and update the repository based on completion data received from the container orchestration platform in response to performing at least a portion of the multi-stage update based on the update data.

A hook may be utilized to provide the update data to the container orchestration platform in response to identification of the change to the repository of the version control system.

The completion data may be included in a commit notification received from the container orchestration platform.

The update data may be provided via an application programming interface (API) of the container orchestration platform.

The scheduling information may include or identify a directed-acyclic graph (DAG). The processing device may be further configured to perform the multi-stage update based on the DAG. Each stage of the multi-stage update may correspond to a node in the DAG. A hook may be utilized to perform the multi-stage update based on the DAG.

Each stage of the multi-stage update may correspond to a node in the DAG and/or a hook may be utilized to perform the multi-stage update based on the DAG.

The component of the container orchestration platform may comprise a first component and a second component, the update data may comprise first update data associated with the first component, and the processing device may be further configured to provide second update data associated with the second component to the container orchestration platform based on the completion data. A hook may be utilized to provide the second update data.

The processing device may be further configured to perform the multi-stage update on the component of the container orchestration platform based on the scheduling information associated with each stage of the multi-stage update.

The processing device may be further configured to generate at least a portion of a directed-acyclic graph (DAG) based on the change to the repository of the version control system, wherein the scheduling information includes the DAG.

In accordance with a third aspect of the present disclosure, there is provided a non-transitory computer-readable storage medium including instructions that, when executed by a processing device, cause the processing device to perform the method in accordance with the first aspect or the optional examples of the first aspect. In particular, the non-transitory computer-readable storage medium in accordance with the third aspect including instructions that, when executed by a processing device, cause the processing device to identify a change to a repository of a version control system; provide, by the processing device, update data to a container orchestration platform in response to identification of the change to the repository of the version control system, the update data associated with a multi-stage update on a component of the container orchestration platform, and the update data including scheduling information associated with each stage of the multi-stage update; and update the repository based on completion data received from the container orchestration platform in response to performing at least a portion of the multi-stage update based on the update data.

A hook may be utilized to provide the update data to the container orchestration platform in response to identification of the change to the repository of the version control system.

The completion data may be included in a commit notification received from the container orchestration platform.

The update data may be provided via an application programming interface (API) of the container orchestration platform.

The scheduling information may include or identify a directed-acyclic graph (DAG). The instructions may further cause the processing device to perform the multi-stage update based on the DAG. Each stage of the multi-stage update may correspond to a node in the DAG. A hook may be utilized to perform the multi-stage update based on the DAG.

Each stage of the multi-stage update may correspond to a node in the DAG and/or a hook may be utilized to perform the multi-stage update based on the DAG.

The component of the container orchestration platform may comprise a first component and a second component, the update data may comprise first update data associated with the first component, and the instructions may further cause the processing device to provide second update data associated with the second component to the container orchestration platform based on the completion data. A hook may be utilized to provide the second update data.

The instructions may further cause the processing device to perform the multi-stage update on the component of the container orchestration platform based on the scheduling information associated with each stage of the multi-stage update.

The instructions may further cause the processing device to generate at least a portion of a directed-acyclic graph (DAG) based on the change to the repository of the version control system, wherein the scheduling information includes the DAG.

### BRIEF DESCRIPTION OF THE DRAWINGS

The described embodiments and the advantages thereof may best be understood by reference to the following description taken in conjunction with the accompanying drawings. These drawings in no way limit any changes in form and detail that may be made to the described embodiments by one skilled in the art without departing from the scope of the described embodiments.

To easily identify the discussion of any particular element or act, the most significant digit or digits in a reference number refer to the figure number in which that element is first introduced.
FIG. 1 illustrates an exemplary operating environment for supporting container orchestration platforms with a version control system according to some embodiments of the present disclosure.
FIG. 2 illustrates a process flow for supporting container orchestration platforms with a version control system according to some embodiments of the present disclosure.
FIG. 3 illustrates exemplary scheduling information according to some embodiments of the present disclosure.
FIG. 4 illustrates a flow diagram of a method for utilizing a version control system repository to provide a backing store for cluster data according to some embodiments of the present disclosure.
FIG. 5 illustrates a block diagram of an example system for utilizing a version control system repository to provide a backing store for cluster data according to some embodiments of the present disclosure.
FIG. 6 illustrates a block diagram of an example system according to some embodiments of the present disclosure.

### DETAILED DESCRIPTION

The following description sets forth numerous specific details such as examples of specific systems, components, methods, and so forth, in order to provide a good understanding of various embodiments of the techniques described herein for supporting container orchestration platforms with a version control system. It will be apparent to one skilled in the art, however, that at least some embodiments may be practiced without these specific details. In other instances, well-known components, elements, or methods are not described in detail or are presented in a simple block diagram format in order to avoid unnecessarily obscuring the techniques described herein. Thus, the specific details set forth hereinafter are merely exemplary. Particular implementations may vary from these exemplary details and still be contemplated to be within the scope of the present disclosure.

Container orchestration platforms provide the ability to automate, manage, and coordinate some aspects of configurations, deployment, scaling, and operations of multiple containers across multiple host systems. Existing container orchestration platforms employ state seeking machinery in conjunction with a backing store to achieve a desired state. For example, an administrator may describe in a backing store (e.g., etcd database) an expected final state of a system. When the backing store is updated, signals are sent to API clients (e.g., controllers) that update the system to match the new desired state. These updates (e.g., adjustments, changes, etc.) are applied using eventual-consistency algorithms. These algorithms, however, are not suitable for all environments, such as environments that require specific ordering and/or timing of updates. For example, in automotive environments, guarantees in time and ordering are necessary for each application that is certified for Functional Safety, whereas scaling workload across multiple nodes dynamically is a second order problem. Adding further complexity, state seeking always influences the execution order even if external resources are managed, scheduling needs to occur deterministically. That means that workloads (e.g., pods) need to be pinned on specific nodes in addition to the order in which they are scheduled being important. These limitations can drastically reduce the capabilities of container orchestration platforms as well as the efficiency, reliability, predictability, and control over updates to the system, contributing to limited applicability, unreliable performance, and systems, devices, and techniques with limited capabilities.

Accordingly, many embodiments disclosed hereby provide various techniques and features for supporting container orchestration platforms with a version control system. For example, a version control system in conjunction with hooks may be utilized to provide the underlying backend for a cluster of nodes. More specifically, various embodiments provide techniques and features to utilize a version control system repository to provide a backing store for cluster data. The components, techniques, and features of the version control system may be integrated with and configured to provide an improved backend for the container orchestration platform and/or clusters thereof. In many embodiments, hooks may be utilized to send update data (e.g., notifications) in response to changes to the backing store. The update data may trigger various API clients to perform updates in a desired manner. For example, the update data may indicate scheduling information associated with each stage of the multi-stage update, such as by including or identifying a location of the scheduling information in the update data. The scheduling information may control the order and/or timing of performance of various stages in the multi-stage update. In several embodiments, the scheduling information may include or identify a graph, such as a directed-acyclic graph (DAG), that is utilized to control the ordering and/or timing of the updates. In various embodiments, the version control system may be decentralized, enabling the underlying backing store to be synchronized across multiple datacenter or cloud providers.

In these and other ways, components/techniques described hereby may provide many technical advantages for supporting container orchestration platforms with a version control system. For example, customized conditions, ordering, and timing of updates can be reliably and efficiently implemented. Therefore, the computer-based techniques of the current disclosure improve the functioning of container orchestration systems, resulting in better performance and improved capabilities as compared to conventional approaches. Therefore, embodiments disclosed hereby can be practically utilized to improve the functioning of a computer and/or to improve a variety of technical fields including container orchestration, update administration and control, and distributed computing.

These illustrative examples are given to introduce the reader to the general subject matter discussed here and are not intended to limit the scope of the disclosed concepts. The following sections describe various additional features and examples with reference to the drawings in which like numerals indicate like elements but, like the illustrative examples, should not be used to limit the present disclosure.

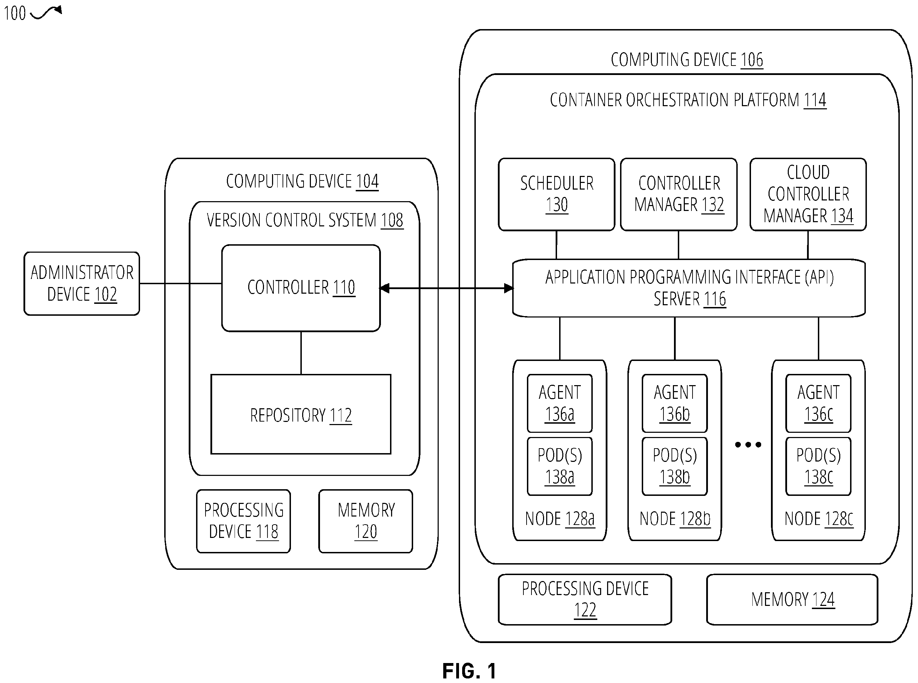

FIG. 1 illustrates an operating environment 100 for supporting a container orchestration platform 114 with a version control system 108 according to some embodiments. Operating environment 100 includes an administrator device 102, a first computing device 104 with the version control system 108, a processing device 118, and a memory 120, and a second computing device 106 with the container orchestration platform 114, a processing device 122, and a memory 124. It will be appreciated that the version control system 108 and the container orchestration platform 114 may be implemented on one or more of the same or different computing devices with one or more processing devices and/or memories without departing from the scope of this disclosure. In various embodiments described hereby, the version control system 108 may operate to provide an underlying backend for clusters of the container orchestration platform 114. As described in more detail below, the version control system 108 may enable updates (e.g., modifications, changes, etc.) to be applied to various components of the container orchestration platform 114 in a predetermined manner. The container orchestration platform 114 may generally operate to administer and manage nodes for executing workloads (e.g., pods). One or more components of FIG. 1 may be the same or similar to one or more other components disclosed hereby. Further, aspects discussed with respect to various components in FIG. 1 may be implemented by one or more other components from one or more other embodiments without departing from the scope of this disclosure. For example, version control system 108, or one or more components thereof, may be included in container orchestration platform 114 without departing from the scope of this disclosure. Embodiments are not limited in this context.

In the illustrated embodiment, version control system 108 includes a controller 110 and a repository 112. The repository 112 may be utilized to store cluster data for the container orchestration platform 114. In many embodiments, the repository 112 functions as a backing store for the container orchestration platform 114 and/or clusters thereof. The controller 110 may operate to implement functionality associated with the repository 112 and/or version control system 108. For example, the controller 110 may enable administrator device 102 to interface with and modify the contents of the repository 112. In another example, the controller 110 may communicate update data, such as notifications, to various components of the container orchestration platform 114. In yet another example, controller 110 may generate update data based on modifications to repository 112. In one embodiment, controller 110 may generate (e.g., create, update, modify) a graph, such as a directed-acyclic graph (DAG), based on modifications to repository 112. In one such embodiment, the graph may be utilized by components of the container orchestration platform 114 to apply updates according to a specific ordering, timing, and/or manner.

In some embodiments, in response to modifications to the contents of the repository 112, the controller 110 may communicate update data identifying scheduling information to cause components of the container orchestration platform 114 to perform one or more updates (e.g., stages of a multi-stage update) in a prescribed ordering, timing, and/or manner. In various embodiments, updates may include or refer to one or more of modifications, creations, deletions, patches, instantiations, migrations, or the like performed in response to modifications to the backing store (e.g., repository 112). In various embodiments, the version control system 108 may be decentralized, enabling the underlying backing store to be synchronized across multiple datacenter or cloud providers. The components, techniques, and features of the version control system 108 are integrated with and configured to provide an improved backend for clusters of container orchestration platform 114. Generally, the version control system may include a system that is under version control and provides techniques and/or components to notify/hook into an API of a container orchestration platform.

The scheduling information may include, or identify, a directed-acyclic graph (DAG) that may be utilized to perform the updates in the prescribed ordering, timing, and/or manner. For example, the scheduling information may include a location of the DAG. In some embodiments, conditions may be utilized to control how updates are performed. In some such embodiments, Boolean logic may be utilized to control how updates are performed. For example, conditions may be utilized to determine an upgrade path for a component. In some such examples, conditions may be utilized to select the upgrade path along a DAG. More generally, in some embodiments, the version control system 108 may function to provide a layer of abstraction that can be utilized to provide support for handling scenarios and implementing strategies associated with updates.

In many embodiments, communication of update data to the container orchestration platform 114 may be triggered by hooks of the version control system 108. A hook may refer to a custom script that are executed when certain events or actions occur. Hooks may be utilized to alter internal behavior and/or generate notifications when certain events occur in a repository, such as updates to the repository 112. In various embodiments, the hooks may include client-side hooks and/or server-side hooks. For example, client-side hooks may be triggered by operations such as committing and server-side hooks may run on network operations, such as receiving pushed commits. In many embodiments, hooks may be utilized to trigger updates to components of the container orchestration platform 114 in response to and/or based on changes to the repository 112. In some embodiments, the repository 112 may be updated to reflect completed updates. In some such embodiments, hooks may be utilized to update the repository 112 to reflect completed updates.

In various embodiments, the container orchestration platform 114 may assemble one or more computing devices, which may include virtual or physical machines, into a group of nodes, referred to as a cluster, which can run workloads in containers. For example, the container orchestration platform 114 may include, utilize, or implement a Kubernetes^{™} cluster. The group of nodes may include a master node 126 and one or more worker nodes 128a, 128b, 128c (collectively referred to as worker nodes 128). The master node 126 may host control plane components, such as an API server 116, a scheduler 130, a controller manager 132, and a cloud controller manager 134. In one embodiment, the version control system 108, or portions thereof, may be control plane components. In some embodiments, the master node 126 may be implemented by one or more computing devices.

The control plane components may make global decisions about a cluster (e.g., scheduling), as well as detecting and responding to cluster events. The API server 116 may comprise the front end of the control plane. In many embodiments, the API server 116 facilitates communication between various internal and external components of the container orchestration platform 114. In various embodiments, hooks may be utilized to cause notifications (e.g., update data) to be sent to trigger various API clients, such as to perform updates. The scheduler 130 may watch for newly created pods with no assigned node and select a node for the pod to run on. In many embodiments, the scheduler 130 may apply updates in a prescribed manner by scheduling workloads (e.g., pods) corresponding to performing various stages of an update based on update data and/or timing information. In one embodiments, the scheduler 130 may traverse a DAG to cause updates to be performed according to a prescribed timing, order, and/or manner. In some embodiments, performance of updates in a prescribed ordering, timing, and/or manner may be achieved without having to pin workloads to specific nodes, such as via agents 136. In other embodiments, pinning may be utilized.

The controller manager 132 is a control plane component that runs controller processes to monitor the current state of the cluster and make appropriate changes to ensure sufficient pods remain in a running and health state, such as based on a set of conditions. In one example, the controller manager 132 may include a Kubernetes Controller Manager. In various embodiments described hereby, the set of conditions may be defined in the repository 112 of the version control system 108. For example, the controller manager 132 may update (e.g., create, modify, or destroy) one or more nodes, or cause to be updated, based on the set of conditions defined in the repository 112. Accordingly, as described in more detail below, the version control system 108 may interact (directly or indirectly) with the controller manager 132 to cause the controller manager 132 to update nodes based on data (e.g., conditions, parameters, etc.) stored in the repository 112. In one embodiment, the controller manager 132 may traverse a DAG to determine order, timing, and/or manner in which updates are performed.

The cloud controller manager 134 enables linking a cluster to a cloud service provider API and separates out the components that interact with the cloud platform from components that only interact with the cluster. Among other things, the control plane may maintain communication with the worker nodes 128 in order to schedule containers efficiently. In many embodiments, the control plane may run across multiple nodes to provide redundancy. In one example, the cloud controller manager 134 may include a Kubernetes Cloud Controller Manager.

The worker nodes 128 may run pods. In the illustrated embodiment, each node 128a, 128b, 128c includes an agent 136a, 136b, 136c (collectively referred to as agents 136) and one or more pods 138a, 138b, 138c (collectively referred to as pods 138), respectively. Each pod may include single instances of an application, containers may run inside of pods, and workloads may be executed within the containers. The agents may be responsible for ensuring pods are running and healthy, such as based on a set of conditions. In various embodiments described hereby, the set of conditions may be defined in the repository 112 of the version control system 108. For example, an agent may update (e.g., create, modify, or destroy) one or more components of a worker node, or cause to be updated, based on the set of conditions defined in the repository 112. Accordingly, as described in more detail below, the version control system 108 may interact (directly or indirectly) with the agents 136 to cause the agents to update components of a worker node based on data (e.g., conditions, parameters, etc.) stored in the repository 112. In one embodiment, an agent may traverse a DAG to determine order, timing, and/or manner in which updates are performed. In one embodiments, agents may be utilized to avoid having to pin workloads to specific nodes.

It should be noted that although a single processing device 118, 122 and a single memory 120, 124 are depicted in each of the computing devices 104, 106 of FIG. 1 for simplicity, other embodiments may include multiple processing devices, storage devices, or devices. Processing devices 118, 122 may include a complex instruction set computing (CISC) microprocessor, reduced instruction set computing (RISC) microprocessor, very long instruction word (VLIW) microprocessor, or a processor implementing other instruction sets or processors implementing a combination of instruction sets. Processing devices 118, 122 may also include one or more special-purpose processing devices such as an application specific integrated circuit (ASIC), a field programmable gate array (FPGA), a digital signal processor (DSP), network processor, or the like. Further details regarding supporting execution of jobs with container orchestration platforms will be discussed below.

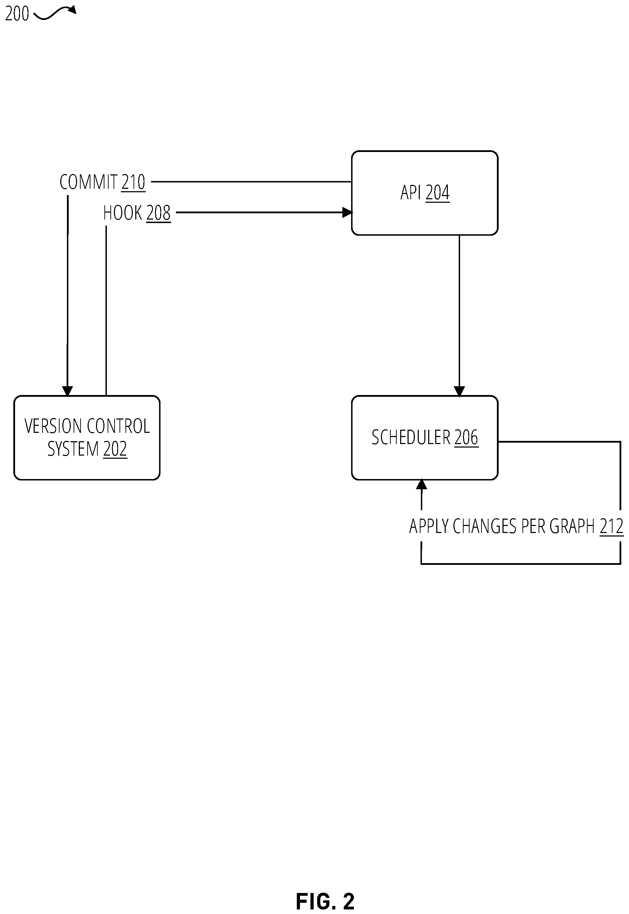

FIG. 2 illustrates a process flow 200 for supporting container orchestration platforms with a version control system according to some embodiments. For example, process flow 200 may correspond to interactions between a version control system 202, an API 204, and a scheduler 206 to perform updates. In various embodiments, the version control system 202 may utilize a hook to cause the scheduler 206 to perform updates, such as in response to modification to a repository of the version control system 202, to one or more components of a container orchestration platform in a prescribed ordering, timing, and/or manner. In various such embodiments, the version control system 202 may receiving completion data (e.g., a commit notification) in response to performance of the updates. The completion data may be utilized to update the repository of the version control system 202 to reflect the current state of updated components. One or more components of FIG. 2 may be the same or similar to one or more other components disclosed hereby. For example, version control system 202 may be the same or similar to version control system 108. In another example, API 204 and/or scheduler 206 may be the same or similar to API server 116 and/or scheduler 130, respectively. Further, aspects discussed with respect to various components in FIG. 2 may be implemented by one or more other components from one or more other embodiments without departing from the scope of this disclosure. For example, version control system 202, API 204, and scheduler 206, or components thereof, may comprise one or more portions of container orchestration platform 114 without departing from the scope of this disclosure. Embodiments are not limited in this context.

In process flow 200, version control system 202 may send update data to scheduler 206 via API 204 in response to a hook 208 triggered by modification of a repository serving as a backing store for a cluster of nodes. In various embodiments, the update data may cause the scheduler 206 to perform updates, such as according to scheduling information included in, or identified by, the update data. For example, the scheduling information may include a directed graph (e.g., a DAG). In one embodiment, the scheduler 206 may traverse the graph to apply the updates in a desired ordering, timing, and/or manner. For example, stages of a multi-stage update for an application certified for functional safety may be applied in a required order. In some embodiments, logic may be applied to traverse the graph, such as to select an upgrade path along the graph. In one embodiments, successful completion of a preceding stage must be determined before proceeding to a subsequent stage. More generally, the hook 208 may cause update data that causes various components of a container orchestration platform and/or cluster of nodes to be updated (including modified, created, deleted, patched, instantiated, migrated, or the like).

The updates may be performed on one or more components of a container orchestration platform and/or cluster of nodes and, in response to the updates, a commit 210 may be received by the version control system 202 via API 204. The commit may include a completion data regarding performance of the updates such as results, parameters, timing, configuration, conditions, current state, previous state, or the like. In several embodiments, the repository of the version control system 202 may be updated based on the commit 210, such as to reflect the results, parameters, timing, configuration, conditions, current state, previous state, or the like of the update. In one embodiment, hooks may be utilized to cause the repository to be updated based on the commit 210. In some embodiments, successful completion of a stage of a multi-stage update may be determined prior to proceeding to a subsequent stage.

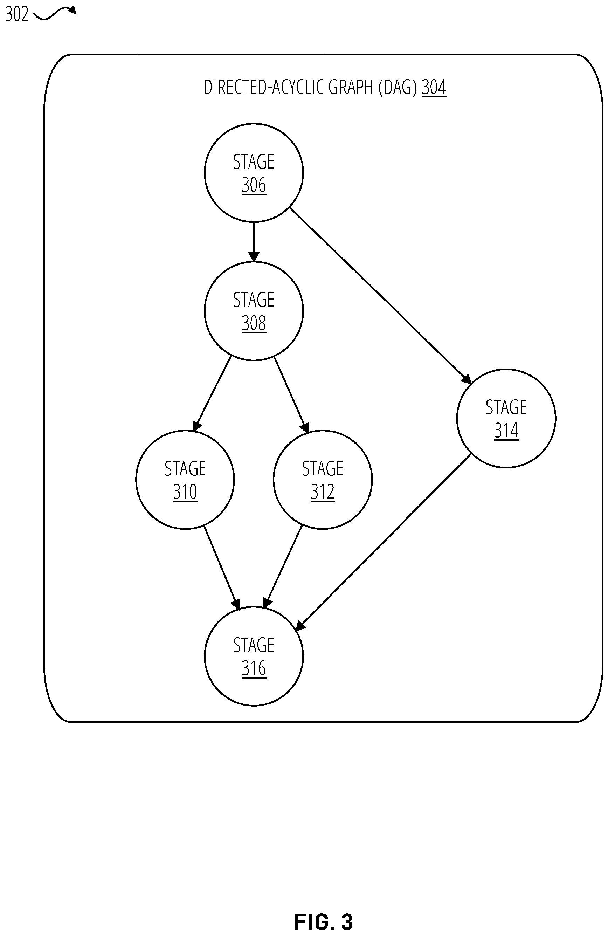

FIG. 3 illustrates scheduling information 302 including a DAG 304. The DAG 304 may include a set of nodes that correspond to stages 306, 308, 310, 312, 314, 316 of a multi-stage update. In various embodiments described hereby, the scheduling information 302 may be utilized to cause the stages to be performed in a prescribed ordering, timing, and/or manner, such as based on DAG 304. One or more components of FIG. 3 may be the same or similar to one or more other components disclosed hereby. For example, the scheduling information 302 may be included in or identified by the notification triggered by hook 208. Further, aspects discussed with respect to various components in FIG. 3 may be implemented by one or more other components from one or more other embodiments without departing from the scope of this disclosure. For example, DAG 304 may be generated by version control system 108 without departing from the scope of this disclosure. Embodiments are not limited in this context.

As previously mentioned, the scheduling information 302 may be utilized to cause stages of a multi-stage update to be performed in a prescribed ordering, timing, and/or manner. For example, the changes to the repository of a version control system may be performed one at a time, such as based on update stages in DAG 304. In some such examples, it may be ensured that changes are taken in consideration of moving to the next change. In various embodiments, the manner in which updates are performed can include sequentially or squashed. For example, stage 306 and network interface device 608 may be performed sequentially and stage 310 and stage 312 may be squashed. In many embodiments, the ordering, timing, and/or manner prescribed by the scheduling information 302 may enable dependencies between changes and/or preferences or conditions for updates (e.g., speed). For example, a condition may be applied to determine whether stage 306 continues to stage 308 or stage 314. In one such example, an estimated completion time may be utilized to select stage 308 or stage 314 to achieve a fastest completion time. It will be appreciated that the stages and configuration of DAG 304 may be readily adapted to achieve a desired ordering, timing, and/or manner for performing updates.

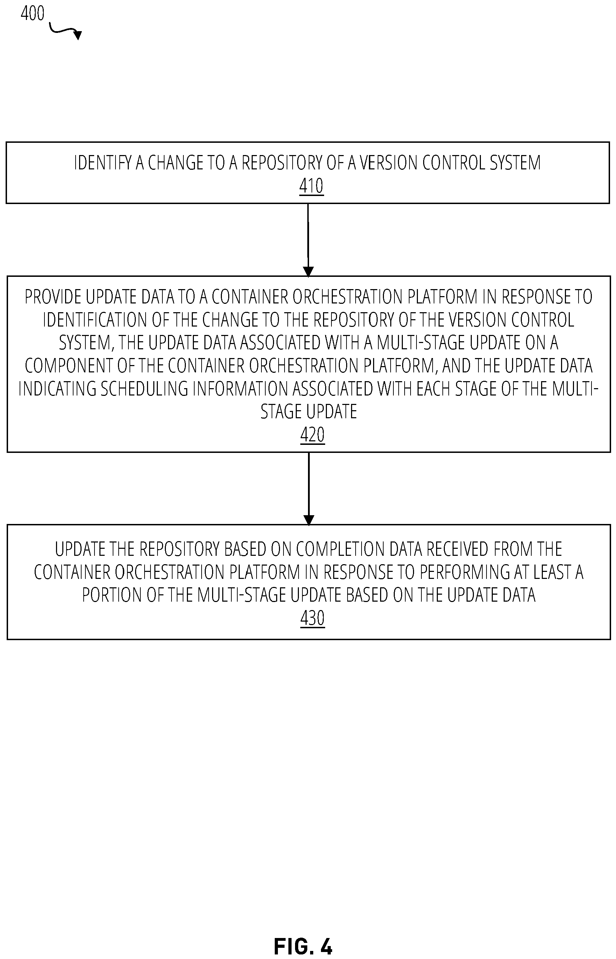

FIG. 4 is a flow diagram of a method 400 for utilizing a version control system repository to provide a backing store for cluster data according to some embodiments. Method 400 may be performed by processing logic that may include hardware (e.g., circuitry, dedicated logic, programmable logic, a processor, a processing device, a central processing unit (CPU), a system-on-chip (SoC), etc.), software (e.g., instructions running/executing on a processing device), firmware (e.g., microcode), or a combination thereof. In some embodiments, at least a portion of method 400 may be performed through the execution of version control system 108, or components thereof, by processing device 118 of FIG. 1. In various embodiments, at least a portion of method 400 may be performed through the execution of container orchestration platform 114, or components thereof, by processing device 122 of FIG. 1.

With reference to FIG. 4, method 400 illustrates example functions used by various embodiments. Although specific function blocks ("blocks") are disclosed in method 400, such blocks are examples. That is, embodiments are well suited to performing various other blocks or variations of the blocks recited in method 400. It is appreciated that the blocks in method 400 may be performed in an order different than presented, and that not all of the blocks in method 400 may be performed.

Method 400 begins at block 410, where the processing logic identifies a change to a repository of a version control system. For example, controller 110 of version control system 108 may identify a change to repository 112. In some embodiments, the change may be identified based on a hook.

Proceeding to block 420, the processing logic may provide update data to a container orchestration platform in response to identification of the change to the repository of the version control system. Further, the update data may be associated with a multi-stage update on a component of the container orchestration platform and the update data may identify scheduling information associated with each stage of the multi-stage update. For example, update data may be provided to container orchestration platform 114 by controller 110 in response to identification of the change to the repository 112 of the version control system 108. The update data may correspond to a multi-stage update to be performed on one or more components of the container orchestration platform 114.

The update data may indicate, identify, and/or include scheduling information associated with each stage of the multi-stage update. For example, the scheduling information included in the update data may include, or identify a location of, DAG 304. In many embodiments, the scheduling information may prescribe the ordering, timing, and/or manner for performing each stage of the multi-stage update. In several embodiments, the update data may be provided to the container orchestration system using a hook (e.g., hook 208) in the version control system. In some embodiments, the multi-stage update may be performed based on a DAG (e.g., DAG 304). In some such embodiments, each stage of the multi-stage update may correspond to a node in the DAG. In various embodiments, a hook may be utilized to perform the multi-stage update based on the DAG. In one embodiments, the version control system 108 (e.g., controller 110) may generate one or more portions of the update data, scheduling information, and/or DAG based on changes to the repository.

At block 430, the processing logic may update the repository based on completion data received from the container orchestration platform in response to performing at least a portion of the multi-stage update based on the update data. For example, repository 112 of version control system 108 may be updated to reflect the results, parameters, timing, configuration, conditions, current state, previous state, or the like of at least a portion of the multi-stage update performed on one or more components of container orchestration platform 114. In some embodiments, the completion data may be received as part of a commit notification (e.g., commit 210) received by the version control system 202. In various embodiments, second update data may be provided to the container orchestration platform in response to the completion data. In various such embodiments, a hook may be utilized to provide the second update data in response to the completion data. In one embodiment, a hook may be utilized to provide the second update data in response to updates to repository 112 based on completion data.

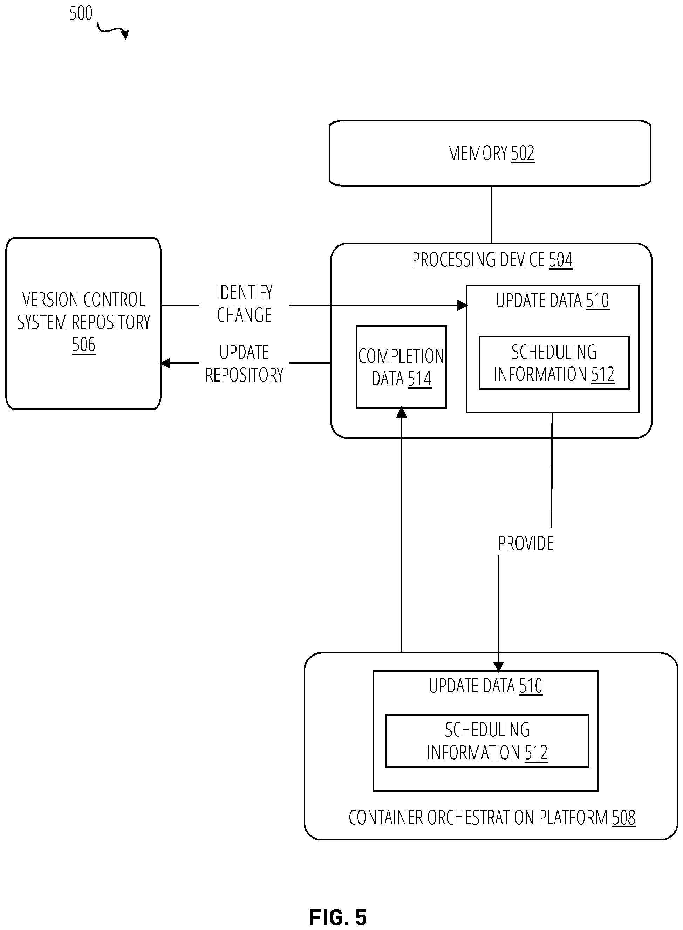

FIG. 5 illustrates a block diagram of a system 500 for supporting execution of jobs according to some embodiments. In the illustrated embodiment, system 500 includes a memory 502, a processing device 504, version control system repository 506, and a container orchestration platform 508. It should be noted that some components of system 500 are shown for illustrative purposes only and are not physical components of the system 500, such as version control system repository 506, container orchestration platform 508, update data 510, scheduling information 512, and/or completion data 514. One or more components of FIG. 5 may be the same or similar to one or more other components disclosed hereby. For example, processing device 504 may be the same or similar to processing device 118. Further, aspects discussed with respect to various components in FIG. 5 may be implemented by one or more other components from one or more other embodiments without departing from the scope of this disclosure. For example, at least one a portion of update data 510, scheduling information 512, and/or completion data 514 may be included in memory 502 without departing from the scope of this disclosure. Embodiments are not limited in this context.

In system 500, the processing device 504 may identify a change to version control system repository 506. In response, the processing device 504 may provide update data 510 identifying scheduling information 512 to the container orchestration platform 508. For example, the update data 510 may include the scheduling information 512 and/or identify a location of the scheduling information 512. In many embodiments, a hook may be utilized to cause processing device 504 to provide update data 510 to container orchestration platform 508. In some embodiments, processing device 504 may generate one or more portions of the update data 510, such as based on the changes to the version control system repository 506. The update data may be utilized by container orchestration platform 508 to perform updates on one or more components of the container orchestration platform 508. For example, the scheduling information 512 may be utilized to perform portions or stages of the update in a prescribed ordering, timing, and/or manner. In response to performance of the update, the container orchestration platform 508 may provide completion data 514 to processing device 504. The processing device 504 may update the version control system repository 506 based on the completion data 514. For example, the version control system repository 506 may be updated to reflect that one or more portions of an update were successfully applied. In some embodiments, the completion data 514 may include, or refer to, a commit notification received from the container orchestration platform 508.

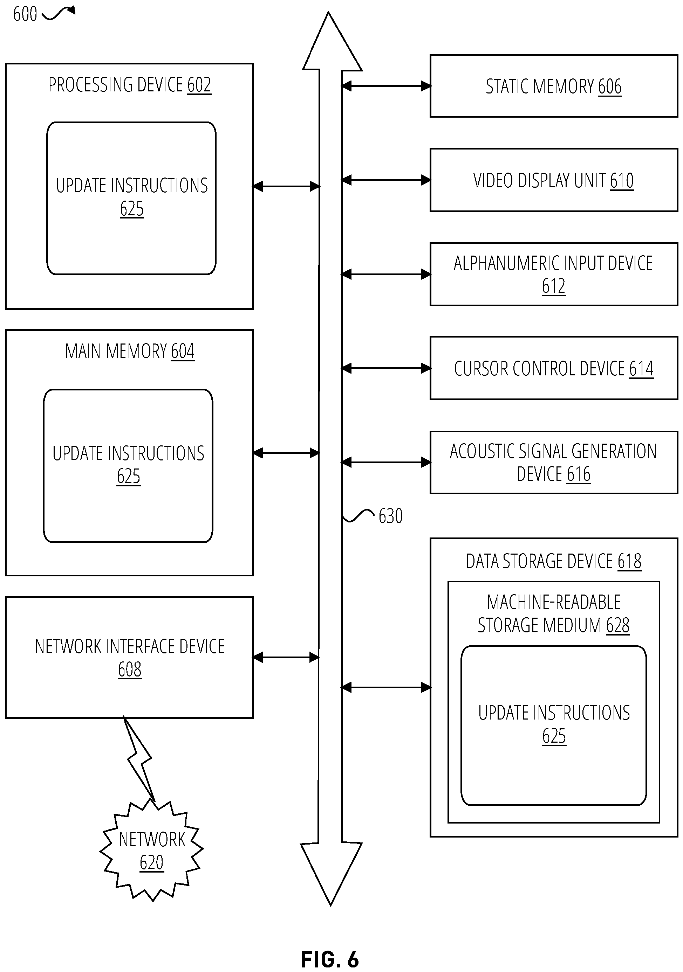

FIG. 6 is a block diagram of an example computing device 600 that may perform one or more of the operations described herein, in accordance with some embodiments of the disclosure. Computing device 600 may be connected to other computing devices in a LAN, an intranet, an extranet, and/or the Internet. The computing device may operate in the capacity of a server machine in client-server network environment or in the capacity of a client in a peer-to-peer network environment. The computing device may be provided by a personal computer (PC), a set-top box (STB), a server, a network router, switch or bridge, or any machine capable of executing a set of instructions (sequential or otherwise) that specify actions to be taken by that machine. Further, while only a single computing device is illustrated, the term "computing device" shall also be taken to include any collection of computing devices that individually or jointly execute a set (or multiple sets) of instructions to perform the methods discussed herein.

The example computing device 600 may include a processing device 602 (e.g., a general purpose processor, a PLD, etc.), a main memory 604 (e.g., synchronous dynamic random access memory (DRAM), read-only memory (ROM)), a static memory 606 (e.g., flash memory and a data storage device 618), which may communicate with each other via a bus 630.

Processing device 602 may be provided by one or more general-purpose processing devices such as a microprocessor, central processing unit, or the like. In an illustrative example, processing device 602 may include a complex instruction set computing (CISC) microprocessor, reduced instruction set computing (RISC) microprocessor, very long instruction word (VLIW) microprocessor, or a processor implementing other instruction sets or processors implementing a combination of instruction sets. Processing device 602 may also include one or more special-purpose processing devices such as an application specific integrated circuit (ASIC), a field programmable gate array (FPGA), a digital signal processor (DSP), network processor, or the like. The processing device 602 may execute the operations described herein, in accordance with one or more aspects of the present disclosure, for performing the operations and steps discussed herein.

Computing device 600 may further include a network interface device 608 which may communicate with a network 620. The computing device 600 also may include a video display unit 610 (e.g., a liquid crystal display (LCD) or a cathode ray tube (CRT)), an alphanumeric input device 612 (e.g., a keyboard), a cursor control device 614 (e.g., a mouse) and an acoustic signal generation device 616 (e.g., a speaker). In one embodiment, video display unit 610, alphanumeric input device 612, and cursor control device 614 may be combined into a single component or device (e.g., an LCD touch screen).

Data storage device 618 may include a machine-readable storage medium 628 on which may be stored one or more sets of instructions 625 that may include instructions for a component (e.g., one or more components of version control system 108, container orchestration platform 114, API 204, and/or scheduler 206) for carrying out the operations described herein, in accordance with one or more aspects of the present disclosure. Instructions 625 may also reside, completely or at least partially, within main memory 604 and/or within processing device 602 during execution thereof by computing device 600, main memory 604 and processing device 602 also constituting computer-readable media. The instructions 625 may further be transmitted or received over a network 620 via network interface device 608.

While machine-readable storage medium 628 is shown in an illustrative example to be a single medium, the term "computer-readable storage medium" should be taken to include a single medium or multiple media (e.g., a centralized or distributed database and/or associated caches and servers) that store the one or more sets of instructions. The term "computer-readable storage medium" shall also be taken to include any medium that is capable of storing, encoding, or carrying a set of instructions for execution by the machine and that cause the machine to perform the methods described herein. The term "computer-readable storage medium" shall accordingly be taken to include, but not be limited to, solid-state memories, optical media, and magnetic media.

Unless specifically stated otherwise, terms such as "identifying," "providing," "updating," "performing," "generating," or the like, refer to actions and processes performed or implemented by computing devices that manipulates and transforms data represented as physical (electronic) quantities within the computing device's registers and memories into other data similarly represented as physical quantities within the computing device memories or registers or other such information storage, transmission or display devices. Also, the terms "first," "second," "third," "fourth," etc., as used herein are meant as labels to distinguish among different elements and may not necessarily have an ordinal meaning according to their numerical designation.

Examples described herein also relate to an apparatus for performing the operations described herein. This apparatus may be specially constructed for the required purposes, or it may include a general purpose computing device selectively programmed by a computer program stored in the computing device. Such a computer program may be stored in a computer-readable non-transitory storage medium.

The methods and illustrative examples described herein are not inherently related to any particular computer or other apparatus. Various general purpose systems may be used in accordance with the teachings described herein, or it may prove convenient to construct more specialized apparatus to perform the required method steps. The required structure for a variety of these systems will appear as set forth in the description above.

The above description is intended to be illustrative, and not restrictive. Although the present disclosure has been described with references to specific illustrative examples, it will be recognized that the present disclosure is not limited to the examples described. The scope of the disclosure should be determined with reference to the following claims.

As used herein, the singular forms "a", "an" and "the" are intended to include the plural forms as well, unless the context clearly indicates otherwise. It will be further understood that the terms "comprises", "comprising", "includes", and/or "including", when used herein, specify the presence of stated features, integers, steps, operations, elements, and/or components, but do not preclude the presence or addition of one or more other features, integers, steps, operations, elements, components, and/or groups thereof. Therefore, the terminology used herein is for the purpose of describing particular embodiments only and is not intended to be limiting. As used herein, the term "and/or" includes any and all combination of one or more of the associated listed items.

It should also be noted that in some alternative implementations, the functions/acts noted may occur out of the order noted in the figures. For example, two figures shown in succession may in fact be executed substantially concurrently or may sometimes be executed in the reverse order, depending upon the functionality/acts involved.

Although the method operations were described in a specific order, it should be understood that other operations may be performed in between described operations, described operations may be adjusted so that they occur at slightly different times or the described operations may be distributed in a system which allows the occurrence of the processing operations at various intervals associated with the processing.

Various units, circuits, or other components may be described or claimed as "configured to" or "configurable to" perform a task or tasks. In such contexts, the phrase "configured to" or "configurable to" is used to connote structure by indicating that the units/circuits/components include structure (e.g., circuitry) that performs the task or tasks during operation. As such, the unit/circuit/component can be said to be configured to perform the task, or configurable to perform the task, even when the specified unit/circuit/component is not currently operational (e.g., is not on). The units/circuits/components used with the "configured to" or "configurable to" language include hardware--for example, circuits, memory storing program instructions executable to implement the operation, etc. Additionally, "configured to" or "configurable to" can include generic structure (e.g., generic circuitry) that is manipulated by software and/or firmware (e.g., an FPGA or a general-purpose processor executing software) to operate in manner that is capable of performing the task(s) at issue. "Configured to" may also include adapting a manufacturing process (e.g., a semiconductor fabrication facility) to fabricate devices (e.g., integrated circuits) that are adapted to implement or perform one or more tasks. "Configurable to" is expressly intended not to apply to blank media, an unprogrammed processor or unprogrammed generic computer, or an unprogrammed programmable logic device, programmable gate array, or other unprogrammed device, unless accompanied by programmed media that confers the ability to the unprogrammed device to be configured to perform the disclosed function(s).

The foregoing description, for the purpose of explanation, has been described with reference to specific embodiments. However, the illustrative discussions above are not intended to be exhaustive or to limit the invention to the precise forms disclosed. Many modifications and variations are possible in view of the above teachings. The embodiments were chosen and described in order to best explain the principles of the embodiments and its practical applications, to thereby enable others skilled in the art to best utilize the embodiments and various modifications as may be suited to the particular use contemplated. Accordingly, the present embodiments are to be considered as illustrative and not restrictive, and the invention is not to be limited to the details given herein, but may be modified within the scope of the appended claims.

## Claims

1. A method comprising:
identifying a change to a repository of a version control system;
providing, by a processing device, update data to a container orchestration platform in response to identification of the change to the repository of the version control system, the update data associated with a multi-stage update on a component of the container orchestration platform, and the update data including scheduling information associated with each stage of the multi-stage update; and
updating the repository based on completion data received from the container orchestration platform in response to performing at least a portion of the multi-stage update based on the update data.

2. The method of claim 1, wherein a hook is utilized to provide the update data to the container orchestration platform in response to identification of the change to the repository of the version control system.

3. The method of claim 1, wherein the completion data is included in a commit notification received from the container orchestration platform.

4. The method of claim 1, wherein the update data is provided via an application programming interface (API) of the container orchestration platform.

5. The method of claim 1, wherein the scheduling information includes or identifies a directed-acyclic graph (DAG).

6. The method of claim 5, further comprising performing the multi-stage update based on the DAG.

7. The method of claim 6, wherein each stage of the multi-stage update corresponds to a node in the DAG; and/or wherein a hook is utilized to perform the multi-stage update based on the DAG.

8. The method of claim 1, wherein the component of the container orchestration platform comprises a first component and a second component, the update data comprises first update data associated with the first component, and the method further comprises providing second update data associated with the second component to the container orchestration platform based on the completion data; and
optionally, wherein a hook is utilized to provide the second update data.

9. The method of claim 1, further comprising performing the multi-stage update on the component of the container orchestration platform based on the scheduling information associated with each stage of the multi-stage update.

10. The method of claim 1, further comprising generating at least a portion of a directed-acyclic graph (DAG) based on the change to the repository of the version control system, wherein the scheduling information includes the DAG.

11. A system comprising:
a memory; and
a processing device, operatively coupled to the memory, configured to carry out the method of any of claims 1 to 10:
identify a change to a repository of a version control system;
provide update data to a container orchestration platform in response to identification of the change to the repository of the version control system, the update data associated with a multi-stage update on a component of the container orchestration platform, and the update data including scheduling information associated with each stage of the multi-stage update; and
update the repository based on completion data received from the container orchestration platform in response to performing at least a portion of the multi-stage update based on the update data.

12. A non-transitory computer-readable storage medium including instructions that, when executed by a processing device, cause the processing device to perform the method of any of claims 1 to 10.
